# FASCICULE DE BREVET EUROPEEN

(11) **EP 2 998 906 B1**
(45) Date de publication et mention de la délivrance du brevet: **15.01.2025**
(21) Numéro de dépôt: 15185750.5
(22) Date de dépôt: 17.09.2015
(51) Int. Cl.: G06K 19/077

(54) **CAPSULE PERMETTANT DE GUIDER LA LUMIÈRE ET DISPOSITIF DE PAIEMENT SANS CONTACT ASSOCIÉ**
KAPSEL ZUM LEITEN VON LICHT, UND ENTSPRECHENDE KONTAKTLOSE ZAHLUNGSVORRICHTUNG
CAPSULE FOR GUIDING LIGHT AND ASSOCIATED CONTACTLESS PAYMENT DEVICE

(30) Priorité: 17.09.2014 FR 1458795
(43) Date de publication de la demande: 23.03.2016
(73) Titulaire: Banks and Acquirers International Holding, 75015 Paris (FR)
(72) Inventeur: SOUBIRANE, Alain, 26500 Bourg-lès-Valence (FR); ALLIROT, Richard, 38700 Corenc (FR)
(74) Mandataire: LLR

(56) Documents cités:
- KR-B1- 100 642 199

## Description

### 1. Domaine de l'invention

La présente technique se rapporte au domaine du paiement. La présente technique se rapporte plus précisément au domaine du paiement sans contact, comme par exemple des terminaux de paiement sans contact. De manière spécifique, la technique proposée se rapporte à une clé USB de paiement sans contact, indiquant grâce à un signalement lumineux qu'une opération de présentation de moyen de paiement sans contact peut être effectuée.

La technique proposée se rapporte plus particulièrement à des moyens de contrôle de la diffusion de la lumière indiquant qu'une opération de présentation de moyen de paiement sans contact peut être effectuée.

### 2. Art antérieur

Les terminaux de paiement sans contact permettent à un utilisateur de réaliser une transaction à partir d'une carte bancaire ou d'un terminal mobile sans insertion de la carte et sans saisie du code confidentiel. Le paiement, basé sur la technologie NFC (« Nier Field Communication »), se fait entre la puce de la carte ou du terminal mobile, et le terminal de paiement positionné à quelques centimètres. La plupart du temps, le terminal de paiement est équipé d'un logo de paiement sans contact indiquant à l'utilisateur où placer sa carte.

Il existe une variété de ces terminaux de paiement, fixes ou mobiles. Depuis peu, des dispositifs USB (« Universal Serial Bus ») de lecture sans contact se développent, permettant notamment à un utilisateur de réaliser des opérations de lecture de cartes sans contact depuis chez lui, en insérant l'embout de la clé dans le port USB de son terminal (par exemple un ordinateur, une tablette, etc.).

La majorité des dispositifs USB de lecture sans contact connus de l'art antérieur possèdent un corps, renfermant notamment un circuit électronique et une ou plusieurs sources lumineuses destinées à être allumées pour signaler à l'utilisateur qu'il doit présenter le dispositif sans contact afin que des données soient échangées entre ce dispositif et le dispositif USB de lecture sans contact.

L'inconvénient de ce type de dispositif USB est qu'il n'est pas utilisable pour effectuer un paiement. C'est particulièrement vrai pour des dispositifs de type clé USB, très compacts, comme le dispositif « ACR122T USB Token NFC Reader » de la société « ACS limited ». D'une part ce type de clé USB n'est pas conforme aux normes de paiement sans contact et d'autre part ce type de dispositif n'assure pas que l'utilisateur soit informé du moment où il doit présenter son moyen de paiement sans contact devant le lecteur pour effectuer un potentiel paiement. En effet, pour qu'une clé USB sans contact puisse être utilisée en tant que terminal de paiement, il est nécessaire d'une part qu'elle respecte des normes en termes de sécurité et d'autre part que le logo de paiement sans contact, souvent apposé en surface, soit correctement orienté, face à l'utilisateur, lorsqu'il connecte la clé à son ordinateur afin que l'utilisateur puisse en quelque sorte percevoir le fonctionnement de celle-ci et plus particulièrement qu'il puisse être averti du moment où il doit présenter son moyen de paiement (carte sans contact ou terminal mobile). En effet, lorsqu'aucune technique particulière n'est prévue, l'utilisateur peut par exemple visualiser le logo à l'envers, ou orienté selon un angle quelconque par rapport à son ordinateur. Par ailleurs, le signalement lumineux indiquant le moment du paiement n'est pas nécessairement bien visible compte tenu de la taille réduite des sources lumineuses. Il peut ainsi être intéressant de prévoir un éclairage complémentaire sur le corps de la clé. KR 100 642 199 B1 divulgue un commutateur rotatif pour un terminal de communication mobile. Un couvercle rotatif est exposé depuis une surface du terminal de communication mobile et est installé de manière rotative dans le boîtier interne. Une roue rotative est couplée au couvercle rotatif. Une pluralité de parties de protection contre la lumière sont formées en continu au niveau du couvercle rotatif. Une pluralité d'unités de capteurs sont formées de parties émettrices de lumière et de parties réceptrices de lumière et sont adjacentes à la roue rotative.

### 3. Exposé de l'invention

La présente technique propose un moyen ergonomique et simple pour surmonter les inconvénients des solutions de l'art antérieur.

A cet l'invention se rapporte à un dispositif de paiement sans contact selon la revendication 1. Des modes de réalisation préférés sont définis dans les revendications dépendantes 2 à 5.

### 4. Liste des figures

Ces caractéristiques, ainsi que d'autres, apparaîtront plus clairement à la lecture de la description suivante d'un mode de réalisation, donné à titre de simple exemple illustratif et non limitatif, et des figures annexées, parmi lesquelles :
- la figure 1 est une vue en trois dimensions de la capsule ;
- la figure 2 illustre un terminal de paiement de forme générale mettant en œuvre la capsule ;
- la figure 3 représente l'anneau ;
- les figures 4A, 4B, 5A, 5B et 6 présentent un dispositif de paiement sans contact selon l'invention:

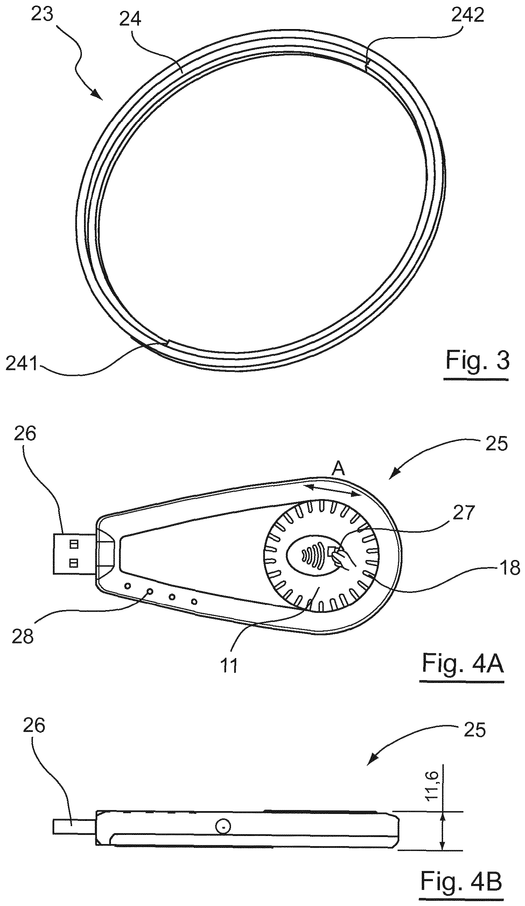

   - figure 4A : dispositif vu de dessus ;
   - figure 4B : dispositif vu de côté ;

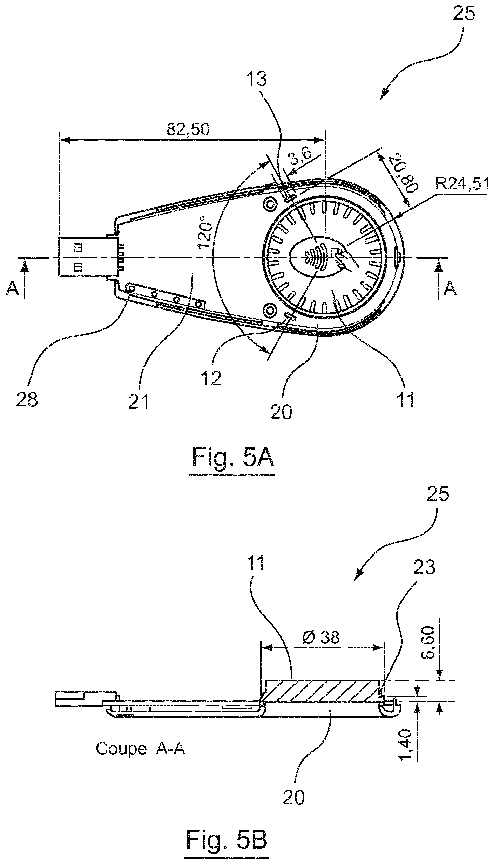

   - figure 5A : vue en coupe de la figure 4A ;
   - figure 5B : coupe A-A de la figure 5A ;

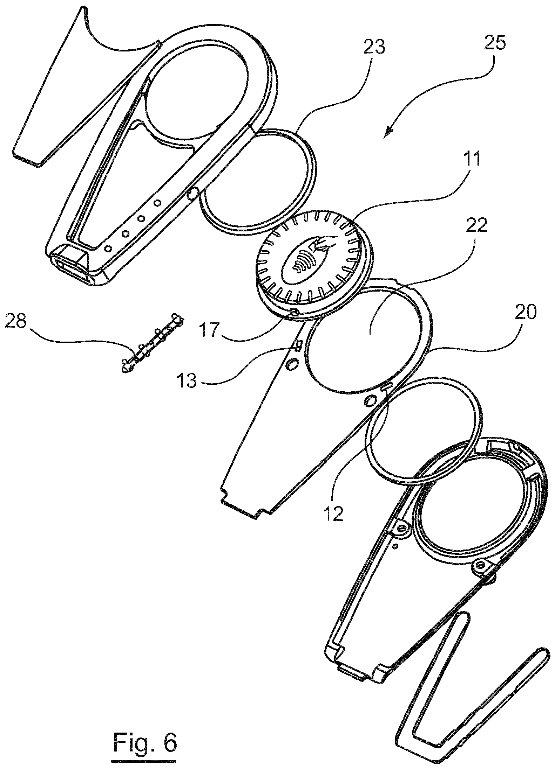

   - figure 6 : vue éclatée.

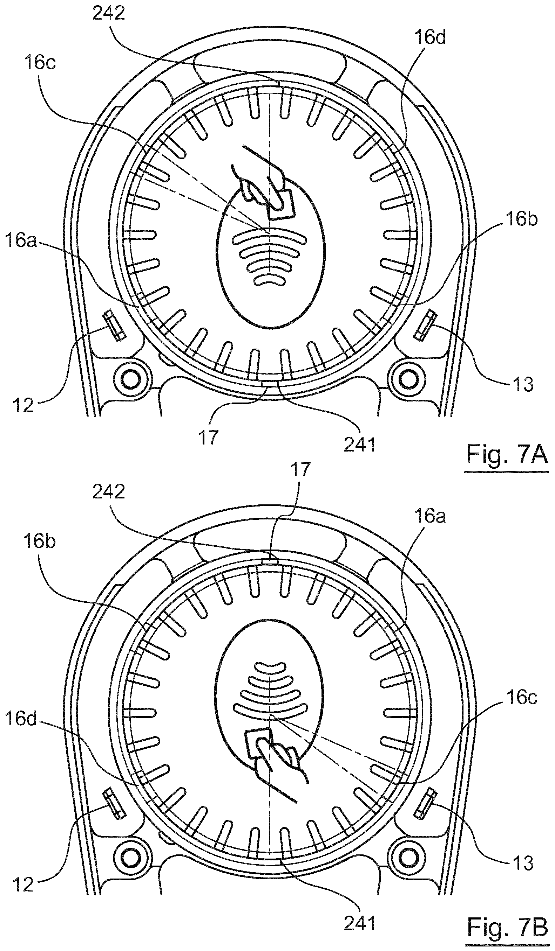

- les figures 7A et 7B représentent les deux positions « correctes » de la capsule dans lesquelles celle-ci s'illumine, selon ce même mode particulier de réalisation.

### 5. Description d'un mode de réalisation de l'invention

### 5.1. Principe général

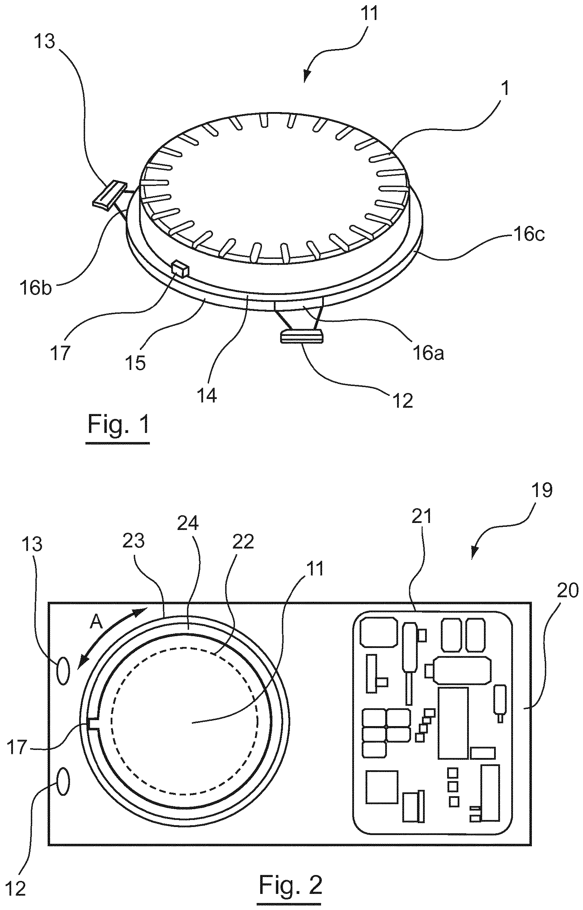

La **figure 1** illustre une capsule **11** permettant de guider la lumière issue d'une ou de deux diodes électroluminescentes **12, 13** avec laquelle elle est alignée. La technique proposée peut être mise en œuvre avec un nombre indifférent de ces diodes électroluminescentes ou avec d'autres types de sources lumineuses. La capsule **11** comprend une embase **14** dans sa partie inférieure qui porte sur sa périphérie un pourtour **15** interrompu en quatre portions **16a, 16b, 16c, 16d.**
Par ailleurs, un ergot **17** est positionné au-dessus de l'embase **14** comme représenté sur les **figures 1 et 2****.** Avantageusement, la capsule comporte des saillies **18** arrangées sur sa surface, permettant au doigt de l'utilisateur d'y adhérer, et de faire tourner facilement la capsule. Ces saillies peuvent éventuellement être remplacées par d'autres moyens de préhension comme des stries, ou des picots.

La capsule **11** peut être orientée par un utilisateur selon au moins deux positions :
- une première position dans laquelle deux des quatre portions **16a, 16b, 16c, 16d** laissent simultanément passer la lumière issue des deux diodes électroluminescentes **12, 13;**
- une seconde position dans laquelle le pourtour **15** de la capsule **11** bloque, au moins partiellement, la lumière issue des deux diodes électroluminescentes **12, 13.**

Le pourtour **15** peut être opaque, ou réfléchissant, de manière à stopper la lumière pour qu'elle ne soit pas diffusée dans la capsule. Ce pourtour peut être réalisé de manière indifférente par application d'un film ou de peinture sur la périphérie de l'embase, par microgravage, ou encore par étiquetage dans le moule (IML : « In Mould Labelling »).

Ainsi, dans la première position la capsule s'illumine, dans la seconde elle reste au moins partiellement « éteinte ». Une telle capsule est destinée à être insérée au sein d'un terminal de paiement sans contact. Un exemple d'un terminal de paiement sans contact **19** de forme quelconque, mettant en œuvre une capsule **11** telle que décrite précédemment, est présenté sur la **figure 2****.** Un tel dispositif de paiement comporte principalement un support **20** portant un circuit imprimé **21** et une ou deux diodes électroluminescentes **12, 13,** et percé d'une cavité circulaire **22.** La capsule transparente **11** est centrée sur la cavité circulaire **22,** et alignée avec les diodes électroluminescentes **12, 13** afin de pouvoir guider la lumière qu'elles diffusent lorsqu'elles sont allumées. Un anneau **23,** tel que représenté sur la **figure 3****,** comportant un évidement **24** aménagé le long de sa bordure interne est positionné par-dessus la capsule, monté serré dans un capot protecteur (non représenté).

Lorsqu'un utilisateur fait tourner la capsule (mouvement indiqué par la **flèche A),** son ergot **17** est guidé dans l'évidement **24** arrangé dans l'anneau **23,** jusqu'à venir en butée contre une des deux extrémités de l'évidement **241, 242.** Le mouvement de rotation est interrompu, et la capsule **11** est positionnée de telle façon que deux des quatre portions **16a, 16b, 16c, 16d** du pourtour **15** se trouvent simultanément face aux deux diodes électroluminescentes **12, 13.** L'utilisateur sait alors que la capsule se trouve dans une position lui permettant d'être illuminée.

### 5.2 Description de l'invention

Les **figures 4A et 4B**, **5A et 5B**, **6** **et** **7A et 7B**, présentent un dispositif de paiement sans contact selon l'invention, le dispositif de paiement étant une clé USB de paiement sans contact.

Les **figures 4A et 4B** présentent une clé USB de paiement sans contact **25,** longue d'environ 107 mm et épaisse d'environ 12mm. Elle possède une fiche **26** destinée à être insérée dans le port USB d'un ordinateur ou d'un terminal mobile ou encore d'une tablette, par un utilisateur souhaitant effectuer un paiement à l'aide d'un moyen de paiement conforme à la norme « sans contact ».

Une telle clé USB intègre également une capsule **11** d'un diamètre d'environ 38 mm, de préférence transparente, et équipée de saillies **18** de préhension. Sur sa surface, un logo de paiement sans contact **27** est apposé. L'utilisateur peut faire pivoter la capsule **11** (mouvement indiqué par la **flèche A),** afin d'orienter le logo de paiement sans contact **27** dans une position « correcte », c'est-à-dire une position dans laquelle le logo se trouve aligné avec la clé USB **25** et le terminal (non représenté), comme visible sur la **figure 4A****.** Selon la technique proposée, le logo de paiement sans contact peut être placé dans deux positions « correctes » d'utilisation, la deuxième position « correcte » étant atteinte après une rotation de 180° de la capsule, à partir de la première position « correcte ».

La capsule **11** est positionnée sur un support **20,** comme illustré sur les **figure 5A, 5B** **et** **6****,** comprenant également un circuit imprimé **11,** une rangée de diodes **28,** et deux diodes électroluminescentes **12, 13,** larges d'environ 4 mm et disposées à 120° l'une de l'autre face à la capsule **11.** Un anneau **23** est positionné par-dessus la capsule, la laissant libre en rotation, comme représenté par la **figure 6****.** Selon un mode de réalisation préférentiel, cet anneau comprend un évidement **24** courant le long de sa surface interne sur 180°. L'anneau **23** peut par exemple être réalisé en POM (polyoxyméthylène).

Lorsque la capsule est correctement orientée, et que le logo est aligné avec la clé USB, les deux portions **16a, 16b,** ou les deux portions **16c, 16d** du pourtour **15** de la capsule **11** se trouvent simultanément face aux deux diodes électroluminescentes **12, 13.** Ces deux portions **16a, 16b ou 16c, 16d** sont ainsi préférentiellement écartées de 120° et larges d'environ 4 mm. Comme illustré sur la **figure 7A****,** une première position « correcte » du logo **27** est atteinte lorsque l'ergot **17** de la capsule **11** est en butée contre une première extrémité **241** de l'évidement **24** aménagé sur la surface interne de l'anneau **23,** positionnant ainsi les portions **16a, 16b** face aux diodes **12, 13.** Une deuxième position « correcte » du logo, présentée sur la **figure 7B****,** est atteinte lorsque la capsule **11** subit une rotation de 180° et que l'ergot **17** vient en butée contre une deuxième extrémité **242** de l'évidement **24,** positionnant cette fois-ci les portions **16c, 16d** face aux diodes **12, 13.**

Lorsque la capsule **11** n'est pas correctement orientée, et que le logo n'est pas aligné avec la clé USB, les diodes électroluminescentes **12, 13** font face au pourtour **15** de la capsule. La lumière émise par les diodes électroluminescentes **12, 13** ne peut donc pas être diffusée dans la capsule.

Ainsi, lorsque l'utilisateur doit effectuer un paiement, la capsule s'illumine si le logo est correctement positionné, en même temps que la rangée de diodes **28,** permettant à l'utilisateur de visualiser plus clairement le moment où il doit approcher sa carte du logo de paiement sans contact.

## Revendications

1. Dispositif de paiement sans contact (25) **caractérisé en ce qu'**il comprend :
- un support (20) portant un circuit imprimé (21) et au moins deux diodes électroluminescentes (12, 13) disposées devant une cavité circulaire (22) aménagée dans ledit support (20) ;
- une capsule (11) comprenant un pourtour (15) interrompu en au moins quatre portions (16a, 16b, 16c, 16d), ladite capsule (11) pouvant être orientée selon au moins deux positions ;
- un anneau (23) présentant au moins un évidement (24) sur sa périphérie interne ;
ladite capsule (11) étant centrée sur ladite cavité (22) dudit support (20) de manière à être alignée avec lesdites au moins deux diodes électroluminescentes (12, 13), et ledit anneau (23) étant positionné par-dessus ladite capsule (11), maintenue libre en rotation, ladite capsule (11) pouvant prendre au moins l'une des deux positions :
- une première position dans laquelle ledit au moins un ergot (17) de ladite capsule (11) est en contact avec une extrémité dudit au moins un évidement (24) dudit anneau (23), deux desdites au moins quatre portions (16a, 16b, 16c, 16d) dudit pourtour (15) de ladite capsule (11) laissant simultanément passer la lumière issue desdites au moins deux diodes électroluminescentes (12,13), provoquant ainsi l'illumination de la capsule (11).
- une seconde position dans laquelle ledit au moins un ergot (17) de ladite capsule (11) se trouve mobile entre les deux extrémités dudit au moins un évidement (24), ledit pourtour (15) de ladite capsule (11) bloquant la lumière issue desdites au moins deux diodes électroluminescentes (12,13) provoquant ainsi l'extinction de la capsule (11).

2. Dispositif de paiement sans contact (25) selon la revendication 1, **caractérisée en ce que** la capsule (11) est cylindrique et comprend une embase (14) dans sa partie inférieure, ledit pourtour (15) se situant sur la périphérie de ladite embase (14).

3. Dispositif de paiement sans contact (25) selon la revendication 2, **caractérisée en ce que** la capsule (11) comprend au moins un ergot (17) disposé sur la surface périphérique surmontant ladite embase (14).

4. Dispositif de paiement sans contact (25) selon la revendication 1, **caractérisée en ce que** la capsule (11) comporte des moyens de préhension sur sa surface.

5. Dispositif de paiement sans contact (25) selon la revendication 4, **caractérisée en ce que** lesdits moyens de préhension comprennent des saillies (18) arrangées au voisinage des bords de ladite capsule.

## Patentansprüche

1. Kontaktlose Zahlungsvorrichtung (25), **dadurch gekennzeichnet, dass** sie Folgendes aufweist:
- einen Träger (20), der eine gedruckte Schaltung (21) und mindestens zwei Leuchtdioden (12, 13) trägt, die vor einem kreisförmigen Hohlraum (22) angeordnet sind, der in dem Träger (20) ausgebildet ist;
- eine Kapsel (11) mit einem Umfang (15), der in mindestens vier Abschnitten (16a, 16b, 16c, 16d) unterbrochen ist, wobei die Kapsel (11) in mindestens zwei Positionen ausgerichtet werden kann;
- einen Ring (23), der mindestens eine Aussparung (24) an seinem Innenumfang aufweist;
wobei die Kapsel (11) auf dem Hohlraum (22) des Trägers (20) zentriert ist, so dass sie mit den mindestens zwei Leuchtdioden (12, 13) ausgerichtet ist, und der Ring (23) über der frei drehbar gehaltenen Kapsel (11) positioniert ist, wobei die Kapsel (11) mindestens eine der beiden Positionen einnehmen kann:
- eine erste Position, in der der mindestens eine Vorsprung (17) der Kapsel (11) mit einem Ende der mindestens einen Aussparung (24) des Rings (23) in Kontakt ist, wobei zwei der mindestens vier Abschnitte (16a, 16b, 16c, 16d) des Umfangs (15) der Kapsel (11) gleichzeitig das von den mindestens zwei Leuchtdioden (12, 13) abgegebene Licht durchlassen, wodurch die Beleuchtung der Kapsel (11) hervorgerufen wird;
- eine zweite Position, in der der mindestens eine Vorsprung (17) der Kapsel (11) zwischen den beiden Enden der mindestens einen Aussparung (24) beweglich ist, wobei der Umfang (15) der Kapsel (11) das von den mindestens zwei Leuchtdioden ausgehende Licht blockiert und so das Erlöschen der Kapsel (11) bewirkt.

2. Kontaktlose Zahlungsvorrichtung (25) nach Anspruch 1, **dadurch gekennzeichnet, dass** die Kapsel (11) zylindrisch ist und in ihrem unteren Teil einen Sockel (14) aufweist, wobei sich der Umfang (15) auf dem Umfang des Sockels (14) befindet.

3. Kontaktlose Zahlungsvorrichtung (25) nach Anspruch 2, **dadurch gekennzeichnet, dass** die Kapsel (11) mindestens einen Vorsprung (17) aufweist, der auf der Umfangsfläche über dem Sockel (14) angeordnet ist.

4. Kontaktlose Zahlungsvorrichtung (25) nach Anspruch 1, **dadurch gekennzeichnet, dass** die Kapsel (11) auf ihrer Oberfläche Greifmittel aufweist.

5. Kontaktlose Zahlungsvorrichtung (25) nach Anspruch 4, **dadurch gekennzeichnet, dass** die Greifmittel Vorsprünge (18) aufweisen, die in der Nähe der Ränder der Kapsel angeordnet sind.

## Claims

1. Contactless payment device (25), **characterised in that** it comprises:
- a support (20) carrying a printed circuit (21) and at least two electroluminescent diodes (12, 13) arranged in front of a circular cavity (22) formed in said support (20);
- a capsule (11) comprising a perimeter (15) interrupted in at least four portions (16a, 16b, 16c, 16d), it being possible to orient said capsule (11) in at least two positions;
- a ring (23) having at least one recess (24) on its internal periphery;
said capsule (11) being centred on said cavity (22) of said support (20) so as to be aligned with said at least two electroluminescent diodes (12, 13), and said ring (23) being positioned on top of said capsule (11), held free to rotate, it being possible for said capsule (11) to take at least one of the two positions:
- a first position in which said at least one lug (17) of said capsule (11) is in contact with one end of said at least one recess (24) of said ring (23), two of said at least four portions (16a, 16b, 16c, 16d) of said perimeter (15) of said capsule (11) allowing the light from said at least two electroluminescent diodes (12,13) to pass simultaneously, thus illuminating the capsule (11).
- a second position in which said at least one lug (17) of said capsule (11) is movable between the two ends of said at least one recess (24) of said perimeter (15) of said capsule (11) blocking the light from said at least two electroluminescent diodes (12, 13), thus darkening the capsule (11).

2. Contactless payment device (25) according to claim 1, **characterised in that** the capsule (11) is cylindrical and comprises a base (14) in its lower part, said perimeter (15) being located on the periphery of said base (14).

3. Contactless payment device (25) according to claim 2, **characterised in that** the capsule (11) comprises at least one lug (17) arranged on the peripheral surface above said base (14).

4. Contactless payment device (25) according to claim 1, **characterised in that** the capsule (11) comprises gripping means on its surface.

5. Contactless payment device (25) according to claim 4, **characterised in that** said gripping means comprise protrusions (18) arranged near the edges of said capsule.
